# EUROPEAN PATENT SPECIFICATION

(11) **EP 2 268 166 B1**
(45) Date of publication and mention of the grant of the patent: **17.12.2014**
(21) Application number: 08754896.2
(22) Date of filing: 31.03.2008
(51) Int. Cl.: B60R 13/02, F16B 21/18, B60J 5/04

(54) **CLIP-MOUNTING SEAT AND VEHICLE INTERIOR COMPONENT**
CLIPMONTAGESITZ UND FAHRZEUGINNENRAUMKOMPONENTE
ASSISE DE MONTAGE D' ATTACHE ET COMPOSANT INTERIEUR DE VEHICULE

(43) Date of publication of application: 05.01.2011
(73) Proprietor: TS Tech Co., Ltd., Asaka-shi Saitama 351-0012 (JP)
(72) Inventor: IWASAKI, Takashi, Gahanna OH 43230 (US)
(74) Representative: Crippa, Paolo Ernesto
(86) International application number: PCT/US2008/058954
(87) International publication number: WO 2009/123616

(56) References cited:
- DE-A1- 10 023 487
- JP-A- 11 344 015
- US-A- 5 694 719
- US-A1- 2003 230 044
- US-A1- 2004 083 583
- US-B2- 6 481 682
- US-B2- 6 918 162

## Description

### Field of the Invention

The present invention relates mainly to a clip-mounting assembly which is used to mount a clip on an inner surface side of a vehicle interior component, the vehicle interior component being adapted to be opposingly fixed to a vehicle body panel by the clip.

### Background of the Invention

Generally, in a vehicle interior component such as a door lining, a rear corner panel, etc., a plurality of anchor-shaped clips are provided at an inner surface of the vehicle interior component. The clips are press-fitted into stop holes formed in a panel surface of a vehicle body panel, whereby the vehicle interior component is opposingly fixed to the vehicle body panel.

More particularly, the clips are provided at the inner surface of the vehicle interior component via clip-mounting seats which are provided at the inner surface of the vehicle interior component. The clip-mounting seats of the vehicle interior component include seating sections on which the clips are to be seated (hereinafter referred to as "clip seating sections"). The clips include base sections, and tip end portions which are protruded from the base sections and are to be press-fitted into the stop holes of the vehicle body panel. The clips are provided at the inner surface of the vehicle interior component with portions of the base sections thereof being seated on the clip seating section of the vehicle interior component.

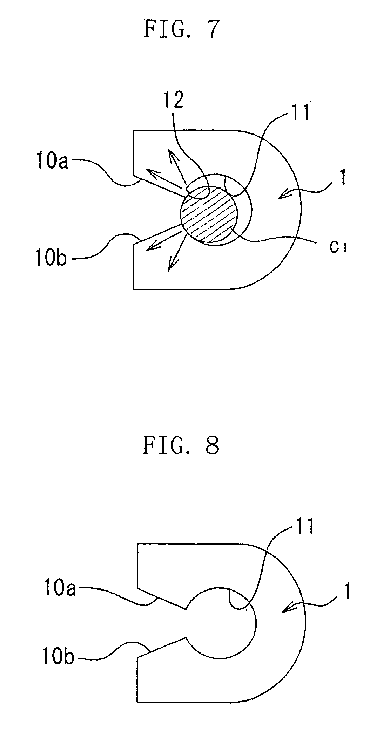

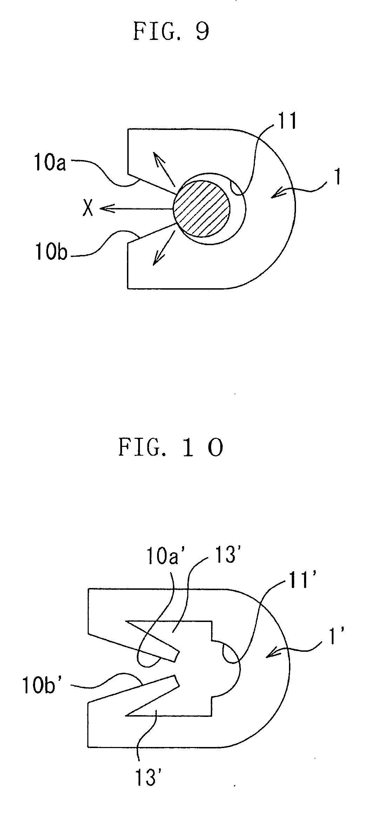

Referring now to Figs. 8 and 9, the conventional clip-mounting seat will be discussed hereinafter in order to facilitate understanding of the present invention. As shown in Fig. 8, the conventional clip-mounting seat includes the clip seating section 1 on which the clip (not shown) is to be seated and which has an engaging hole 11 for engagingly receiving a pillar-shaped axial portion of the clip, and guide edge portions 10a, 10b for allowing the axial portion of the clip to be slid along the guide edge portions 10a, 10b and allowing the axial portion of the clip to be guided into the engaging hole 11.

The guide edge portions 10a, 10b extend inwardly from a side portion of the clip seating section 1, to thereby form a tapered slit having an inner end smaller in size than an outer diameter of the axial portion of the clip. The engaging hole 11 is formed into a substantially circular shape having a size which is larger than the outer diameter of the axial portion of the clip and allows the clip to be capable of being shifted so as to positionally match a corresponding stop hole of the vehicle body panel when the vehicle interior component is to be fixed to the vehicle body panel. The engaging hole 11 continues from inner ends of the guide edge portions 10a, 10b.

The clips which are provided at the vehicle interior component through the clip-mounting seats constructed as discussed above will be easily removed from the vehicle interior component during transportation of the vehicle interior component and/or fixing of the vehicle interior component to the vehicle body panel. The removal of the clips is brought about by a reason for which, when loads applied in such a direction X (indicated in Fig. 9 by an arrow) that the clips are disengaged from the clip seating sections of the clip-mounting seats is applied to the clips, the loads are concentrated on the inner ends of the guide edge portions 10a, 10b of the clip seating sections, to thereby cause the guide edge portions 10a, 10b to be operatively opened relative to each other.

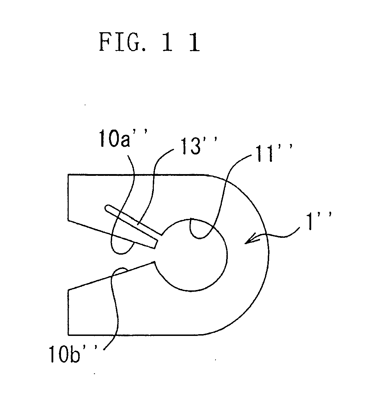

Moreover, there are also proposed clip-mounting seats which, as shown in Figs. 10 and 11, include clip seating sections 1', 1" having engaging holes 11', 11" and guide edge portions 10a', 10b', 10a", 10b" and in the clip seating sections 1', 1" of which notched portions 13' and 13" are provided so as to extend along the guide edge portions 10a', 10b' and 10a" from the engaging holes 11', 11 ", whereby the guide edge portions 10a', 10b' and 10a" are adapted to serve as leaf-spring-shaped arms which are elastically deformable (Japanese Utility Model Application Laid-Open No. Sho. 52-137411 and Japanese Patent Application Laid-Open No. Hei. 6-270675).

With each of the conventional clip-mounting seats, the axial portion of the clip is slid along the guide edge portions 10a', 10b' (10a", 10b") and easily guided into the engaging holes 11' (11"). However, when a load in such a direction that the clip is disengaged from the engaging hole 11' (11") is applied to the clip and concentrated on inner ends of the guide edge portions 10a', 10b' (10a", 10b"), the guide edge portions 10a', 10b' (10a", 10b") are easy to be opened relative to each other. Therefore, each of the conventional clip-mounting seats fails to exert the function of preventing the disengagement of the clip from the clip-mounting seat. Moreover, the notched portions 13', 13" are formed by cutting the clip seating sections 1', 1", so that the guide edge portions 10a', 10b', 10a" are easy to be broken and rigidity of the clip seating sections 1', 1" is decreased.

Document DE10023487A1 discloses a clip-mounting seat according to the preamble of claim 1.

### Summary of the Invention

The present invention has been made with a view to overcoming the foregoing problems of the prior art clip-mounting seats.

It is therefore an object of the present invention to provide a clip-mounting assembly which includes a clip seating section having an engaging hole for engaging an axial portion of a clip, and guide edge portions for allowing the axial portion of the clip to be guided along the guide edge portions and allowing the axial portion of the clip to be guided into the engaging hole, wherein rigidity of the clip seating section is not decreased and disengagement of the clip from the clip seating section can be positively prevented.

It is another object of the present invention to provided a vehicle interior component provided with a plurality of clip-mounting assembly as stated above.

In accordance with one aspect of the present invention, there is provided a clip-mounting assembly including a clip and a clip mounting seat for mounting said clip to a vehicle interior component. The clip includes a pillar-shaped axial portion. The clip-mounting seat includes a clip seating section, the clip seating section having an engaging hole for engagingly receiving the axial portion of the clip, and a pair of guide edge portions extending to the engaging hole from a side of the clip seating section to thereby form a tapered slit for allowing the axial portion of the clip to be slid along the pair of guide edge portions and allowing the axial portion of the clip to be guided into the engaging hole. The tapered slit has an inner end smaller in size than an outer diameter of the axial portion of the clip. The engaging hole is formed into a substantially circular shape having a size larger than the outer diameter of the axial portion of the clip; and the engaging hole continuing from inner ends of the guide edge portions. At least one of the guide edge portions is provided with a protruding piece projecting into the engaging hole from an inner end of the at least one of the guide edge portions. The protruding piece includes a tip end surface having a width that allows the tip end surface to be operatively come surface-contact with the axial portion of the clip.

In the clip-mounting seat, the at least one of the guide edge portions is provided with the protruding piece which includes the tip end surface having the width that allows the tip end surface to be operatively come surface-contact with the axial portion of the clip, so that even if the clip is moved by a load applied in such a direction that the clip is disengaged from the engaging hole of the clip-mounting seat, the protruding piece operatively comes into surface-contact with the axial portion of the clip, the load that has the tendency to cause the clip to be disengaged from the engaging hole can be positively received by the protruding piece and can be distributed, the clip is shifted to a region of the engaging hole which is adjacent the guide edge portion that is not provided with any protruding piece, and the axial portion of the clip does not come into point-contact with the inner end of the guide edge portion 10b. Therefore, the guide edge portions are hard to be opened relative to each other. Thus, it is possible to prevent the clip from being disengaged from the clip-mounting seat without allowing rigidity of the clip seating section to be decreased.

Each of the guide edge portions may be provided with the protruding piece. In this case, even if the clip is moved by a load applied in such a direction that the clip is slid along the guide edge portions and disengaged from the engaging hole, the tip end surfaces of the protruding pieces operatively come into surface-contact with the axial portion of the clip, whereby the load that has the tendency to cause the clip to be disengaged from the engaging hole can be effectively received by the protruding pieces and can be distributed, so that the guide edge portions can be positively prevented from being opened relative to each other.

The tip end surface of the protruding piece may be formed into a circular arc-shape so as to fit around the axial portion of the clip. In this case, the protruding piece can positively fit around the axial portion of the clip.

According to a further aspect of the present invention, there is provided a vehicle interior component which is provided with a plurality of clip-mounting assemblies as set forth above. Transportation of the vehicle interior component can be performed without causing any inconvenience and fixing of the vehicle interior component to a vehicle body panel can be easily performed without causing any inconvenience.

### Brief Description of the Drawings

Fig. 1 is a schematic perspective view of a door lining at which a plurality of clip-mounting seats according to the present invention are provided;
Fig. 2 is a schematic sectional view of the door lining of Fig. 1, taken on a plane indicated in Fig. 1 by a line A-A;
Fig. 3 is a schematic side view of a clip-mounting seat according to the present invention;
Fig. 4 is a schematic enlarged fragmentary side view of the clip-mounting seat of Fig. 3;
Fig. 5 is a schematic side view of the clip-mounting seat of Fig. 3, which is of assistance in explaining a situation where a clip is prevented from being disengaged from the clip-mounting seat;
Fig. 6 is a schematic enlarged fragmentary side view of a modification of the clip-mounting seat of Fig. 3;
Fig. 7 is a schematic side view of another modification of the clip-mounting seat of Fig. 3, which is of assistance in explaining a situation where a clip is prevented from being disengaged from the modification;
Fig. 8 is a schematic side view of a conventional clip-mounting seat;
Fig. 9 is a schematic side view of the conventional clip-mounting seat, which is of assistance in explaining a situation where a clip is disengaged from the conventional clip-mounting seat;
Fig. 10 is a schematic side view of another conventional clip-mounting seat; and
Fig. 11 is a schematic side view of still another conventional clip-mounting seat.

### Detailed Description

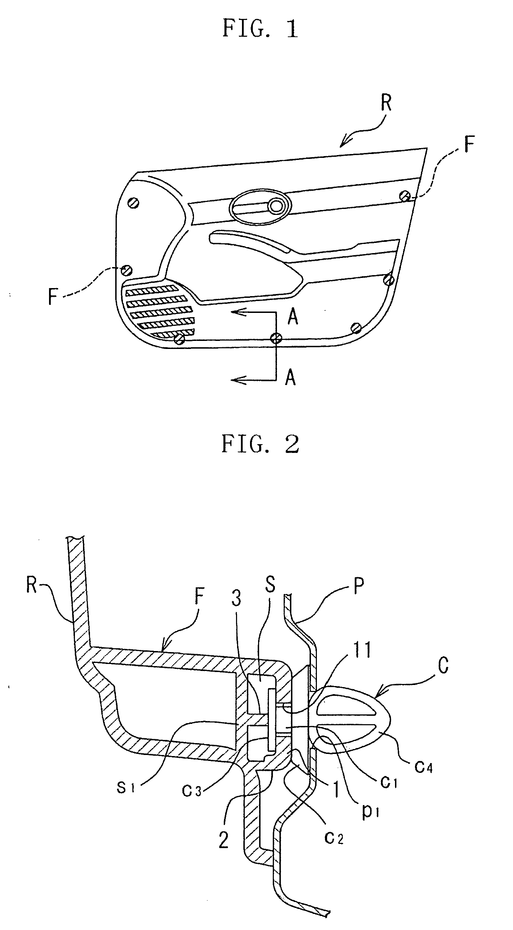

Referring now to Figs. 1 and 2, there is illustrated a vehicle interior component R, for example, a door lining, in which a plurality of clip-mounting seats F according to the present invention for supporting anchor-shaped clips that are used in order to cause the door lining R to be opposingly fixed to a panel surface of a vehicle body panel, for example, a door panel P are disposed at predetermined intervals along peripheral edge portions of an inner surface of the door lining R except an upper edge portion of the inner surface of the door lining R.

As shown in Fig. 2, each of the clip-mounting seats F (only one clip-mounting seat F is shown in Fig. 2) comprises a clip seating section 1, a peripheral wall section 2 standing up from the inner surface of the door lining R and defining a space S in which a portion of a base section of a corresponding clip C is to be received, and a rising rib 3 rising up from a bottom plate s1 of the space S for stoppingly supporting the base section of the clip C. The clip seating section 1 of the clip-mounting seat F is formed with an engaging hole 11. In the illustrated example, the door lining R and the clip-mounting seats F are formed integrally of, for example, polypropylene resin by injection molding.

Each of the clips C (only one clip C is shown in Fig. 2) comprises the base section having a pillar-shaped axial portion c1, a first flange portion c2 and a second flange portion c3 connected to the first flange portion c2 through the pillar-shaped axial portion c1, and an anchor-shaped tip end portion c4. The clip C is adapted to be mounted through a corresponding clip-mounting seat F to the inner surface of the door lining R, with the axial portion c1 thereof being engagingly received in the engaging hole 11 of the clip-mounting seat F, with the first flange portion c2 thereof being seated on the clip seating section 1 of the clip-mounting seat F, with the first and second flange portions c2, c3 thereof interposingly holding the clip seating section 1 of the clip-mounting seat F, and with the second flange portion c3 thereof being stoppingly supported by the rising rib 3 of the clip-mounting seat F. The door lining having the clips mounted through the clip-mounting seats F to the inner surface thereof is opposingly fixed to the door panel P by causing the anchor-shaped tip portions c4 of the clips to be press-fitted into through-holes p1 (only one through-hole p1 is shown in Fig. 2) which are formed in the door panel P.

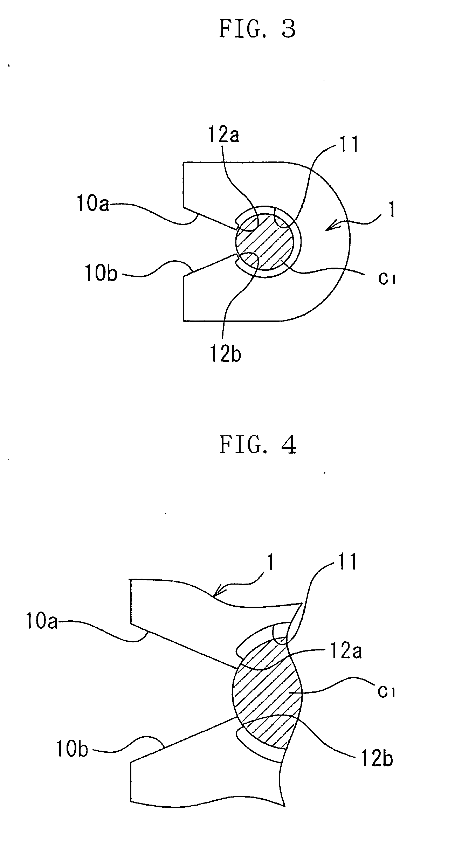

The clip seating section 1 of each of the clip-mounting seats F according to the present invention is basically similar to that of the clip-mounting seat which is shown in Fig. 8. Referring now to Fig. 3, there is illustrated the clip seating section 1 of the clip-mounting seat F according to the present invention. In Fig. 3, elements of the clip seating section 1 of the clip-mounting seat F of the present invention that are substantially similar to those of the clip seating section shown in Fig. 8 are denoted by the same reference numerals. As shown in Fig. 3, the clip seating section 1 of the clip-mounting seat F according to the present invention is formed into a substantially U-shape as viewed from the side and has the engaging hole 11 and a pair of guide edge portions 10a, 10b extending to the engaging hole 11 for allowing the pillar-shaped axial portion c1 of a corresponding clip to be slid along the guide edge portions 10a, 10b and allowing the pillar-shaped axial portion c1 of the clip C to be guided into the engaging hole 11.

The guide edge portions 10a, 10b extend inwardly from a side portion of the clip seating section 11, to thereby form a tapered slit having an inner end smaller in size than an outer diameter of the axial portion c1 of the clip. The engaging hole 11 is formed into a substantially circular shape having a size larger than the outer diameter of the axial portion c1 of the clip C, and continues from inner ends of the guide edge portions 10a, 10b.

In addition to the basic structure of the clip seating section 1, the clip seating section 1 of the clip-mounting seat F according to the present invention has protruding pieces 12a, 12b projecting into the engaging hole 11 from the inner ends of the guide edge portions 10a, 10b. Each of the protruding pieces 12a, 12b is provided with a tip end surface which has a width that allows the tip end surface to come into surface-contact with the axial portion c1 of the clip. Each of the protruding pieces 12a, 12b is formed in such a manner that one side of the protruding piece extends linearly from a corresponding guide edge portion 10a (or 10b). As shown in Fig. 4, the tip end surfaces of the protruding pieces 12a, 12b are formed into circular arc-shapes so as to fit around the axial portion c1 of the clip.

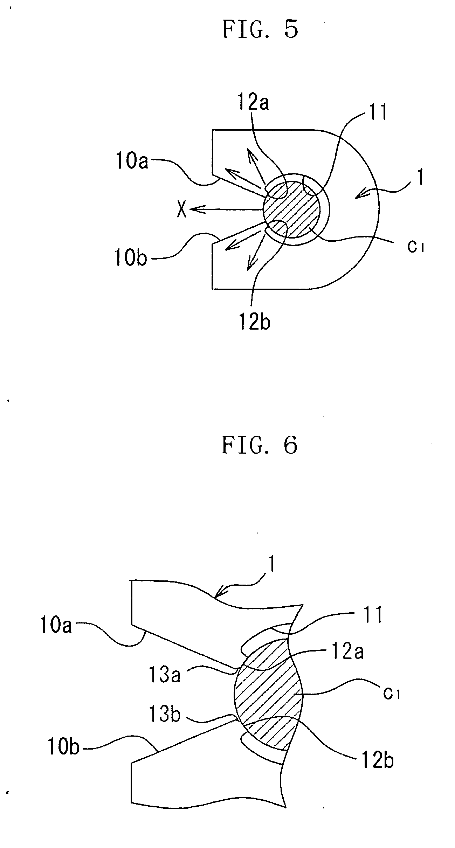

In the clip seating section 1 of the clip-mounting seat that is constructed as discussed above, even if the clip is moved by a load applied in such a direction X (indicated in Fig. 5 by an arrow) that the clip is slid along the guide edge portions 10a, 10b and disengaged from the engaging hole 11, the tip end surfaces of the protruding pieces 12a, 12b operatively come into surface-contact with the axial portion c1 of the clip, whereby the load that has the tendency to cause the clip to be disengaged from the engaging hole 11 can be effectively received by the protruding pieces 12a, 12b and can be distributed, so that the guide edge portions 10a, 10b can be positively prevented from being opened relative to each other. By this, it is possible to prevent the clip from being disconnected from the clip seating section of the clip-mounting seat, without allowing rigidity of the clip seating section 1 to be decreased.

As long as the protruding pieces 12a, 12b can operatively come into surface-contact with the axial portion c1 of the clip at the tip end surfaces thereof, the sides of the protruding pieces are not formed so as to extend linearly from the guide edge portions 10a, 10b and may be formed so as to have slope regions 13a, 13b which are inclined to the engaging hole 11 from the inner ends of the guide edge portions 10a, 10b as shown in Fig. 6. In this case, it is possible to cause an interval between the inner ends of the guide edge portions 10a, 10b not to become much narrower than a required level.

While it is preferable that the protruding pieces are provided at both the inner ends of the guide edge portions 10a, 10b, the protruding piece 12a and the protruding piece 12b are not necessarily provided at the inner end of the guide edge portion 10a and the inner end of the guide edge portion 10b, respectively. As shown in Fig. 7, a protruding piece 12 may be provided at any one of the inner ends of the guide edge portions 10a, 10b (in the example shown in Fig. 7, the protruding piece 12 is provided at the inner end of the guide edge portion 10a). In this case, even if the clip is moved by a load applied in the direction that the clip is slid along the guide edge portions 10a, 10b and disengaged from the engaging hole 11, the protruding piece 12 also operatively comes into surface-contact with the axial portion c1 of the clip at a tip end surface thereof having a circular arc-shape, whereby the load that has the tendency to cause the clip to be disengaged from the engaging hole 11 can be positively received by the protruding piece 12 and can be distributed, the clip is shifted to a region of the engaging hole 11 which is adjacent the guide edge portion 10b that is not provided with any protruding piece, and the axial portion c1 of the clip does not come into point-contact with the inner end of the guide edge portion 10b, so that the guide edge portions 10a, 10b are hard to be opened relative to each other.

As discussed above, the door lining R (Fig. 1) has the clips mounted to the inner surface thereof through the clip-mounting seats which facilitate preventing of disengagement of the clips therefrom, so that transportation of the door lining R can be performed without causing any inconvenience and fixing of the door lining to the vehicle body panel such as the door panel P (Fig. 1) can be easily performed without causing any inconvenience.

While the case where the clip seating section of the clip-mounting seat has the substantially U-shape as viewed from the side has been discussed above, the shape of the clip seating section of the clip-mounting seat may be a substantially square-shape as viewed from the side. Moreover, while the clip-mounting seat has the peripheral wall section 2 standing up from the vehicle interior component, it may has a pair of opposing plates standing up from the inner surface of the vehicle interior component, in lieu of the peripheral wall section 2. In this case, the opposing plates are interconnected by the clip seating section 1 and the bottom plate s1. Moreover, while the case where the entire clip-mounting seats are formed integrally with the door lining has been discussed above, the clip-mounting seats which are formed separately from the door lining may be mounted to the door lining.

The terms and expressions which have been employed are used as terms of description and not of limitation, and there is no intention in the use of such terms and expressions of excluding any equivalents of the features shown and described, or portions thereof, but it is recognized that various modifications are possible within the scope of the invention claimed.

## Claims

1. A clip-mounting assembly including a clip (C) and a clip-mounting seat (F) for mounting said clip (C) to a vehicle interior component (R), said clip (C) including a pillar-shaped axial portion (c1), said clip-mounting seat (F) including a clip seating section (1); said clip seating section (1) having an engaging hole (11) for engagingly receiving said axial portion (c1) of said clip (C), and a pair of guide edge portions (10a, 10b) extending to said engaging hole (11) from a side of said clip seating section (1) to thereby form a tapered slit for allowing said axial portion (c1) of said clip (C) to be slid along said pair of guide edge portions (10a, 10b) and allowing said axial portion (c1) of said clip (C) to be guided into said engaging hole (11); said tapered slit having an inner end smaller in size than an outer diameter of said axial portion (c1) of said clip (C); said engaging hole (11) being formed into a substantially circular shape having a size larger than said outer diameter of said axial portion (c1) of said clip (C); and said engaging hole (11) continuing from inner ends of said guide edge portions (10a, 10b); wherein
at least one of said guide edge portions (10a, 10b) is provided with a protruding piece (12a, 12b, 12);
**characterized in that**
said protruding piece (12a, 12b, 12) projects into said engaging hole (11) from an inner end of said at least one of said guide edge portions (10a, 10b), wherein said
protruding piece (12a, 12b, 12) includes a tip end surface having a width that allows said tip end surface to be operatively come surface-contact with said axial portion (c1) of said clip (C).

2. A clip-mounting assembly as set forth in Claim 1, wherein each of said guide edge portions (10a, 10b) is provided with said protruding piece (12a, 12b).

3. A clip-mounting assembly as set forth in Claim 1 or 2, wherein said tip end surface is formed into a circular arc-shape so as to fit around said axial portion (c1) of said clip (C).

4. A clip-mounting assembly as set forth in Claim 1, wherein the protruding piece (12a; 12b) is formed in such a manner that one side of the protruding piece extends linearly from a corresponding guide edge portion (10a or 10b).

5. A clip-mounting assembly as set forth in Claim 1, wherein side of the protruding piece (12a; 12b) is formed so as to have slope regions (13a, 13b) which is inclined to the engaging hole (11) from the inner ends of the guide edge portions (10a or 10b).

6. A vehicle interior component (R) having a plurality of clip-mounting assemblies as set forth in any one of Claims 1 - 5.

## Patentansprüche

1. Clipmontage-Anordnung, umfassend einen Clip (C) und einen Clipmontage-Sitz (F) zum Montieren des Clips (C) an einer Fahrzeuginnenraum-Komponente (R), wobei der Clip (C) einen säulenförmigen axialen Abschnitt (c1) umfasst, wobei der Clipmontage-Sitz (F) einen Clip-Sitzabschnitt (1) umfasst, wobei der Clip-Sitzabschnitt (1) ein Eingriffsloch (11) zum eingreifenden Aufnehmen des axialen Abschnitts (c1) des Clips (C) und ein Paar von Führungs-Randabschnitten (10a, 10b) aufweist, welche sich zu dem Eingriffsloch (11) von einer Seite des Clip-Sitzabschnitts (1) erstrecken, um dadurch einen sich verjüngenden Schlitz zu bilden, um es dem axialen Abschnitt (c1) des Clips (C) zu erlauben, entlang des Paars von Führungs-Randabschnitten (10a, 10b) zu gleiten, und es dem axialen Abschnitt (c1) des Clips (C) zu erlauben, in das Eingriffsloch (11) hinein geführt zu werden; wobei der sich verjüngende Schlitz ein inneres Ende aufweist, welches in seiner Größe kleiner ist als ein Außendurchmesser des axialen Abschnitts (c1) des Clips (C); wobei das Eingriffsloch (11) in einer im Wesentlichen kreisförmigen Form gebildet ist, welche eine Größe aufweist, welche größer als der Außendurchmesser des axialen Abschnitts (c1) des Clips ist; und wobei das Eingriffsloch (11) von inneren Enden der Führungs-Randabschnitte (10a, 10b) weiterläuft; wobei
wenigstens einer der Führungs-Randabschnitte (10a, 10b) mit einem vorstehenden Teil (12a, 12b, 12) bereitgestellt ist;
**dadurch gekennzeichnet, dass**
das vorstehende Teil (12a, 12b, 12) sich in das Eingriffsloch (11) von einem inneren Ende des wenigstens einen der Führungs-Randabschnitte (10a, 10b) erstreckt, wobei das vorstehende Teil (12a, 12b, 12) eine Spitzen-Endfläche umfasst, welche eine Breite aufweist, welche es der Spitzen-Endfläche erlaubt, betriebsmäßig in Flächenkontakt mit dem axialen Abschnitt (c1) des Clips (C) zu kommen.

2. Clipmontage-Anordnung nach Anspruch 1, wobei jeder der Führungs-Randabschnitte (10a, 10b) mit dem vorstehenden Teil (12a, 12b) bereitgestellt ist.

3. Clipmontage-Anordnung nach Anspruch 1 oder 2, wobei die Spitzen-Endfläche in einer kreisförmigen Bogenform gebildet ist, um so um den axialen Abschnitt (c1) des Clips (C) herum zu passen.

4. Clipmontage-Anordnung nach Anspruch 1, wobei das vorstehende Teil (12a; 12b) derart gebildet ist, dass eine Seite des vorstehenden Teils sich linear von einem entsprechenden Führungs-Randabschnitt (10a oder 10b) erstreckt.

5. Clipmontage-Anordnung nach Anspruch 1, wobei eine Seite des vorstehenden Teils (12a; 12b) so gebildet ist, dass sie angeschrägte Bereiche (13a, 13b) aufweist, welche zu dem Eingriffsloch (11) von den inneren Enden der Führungs-Randabschnitte (10a oder 10b) geneigt ist.

6. Fahrzeuginnenraum-Komponente (R), welche eine Mehrzahl von Clipmontage-Anordnungen nach einem der Ansprüche 1 bis 5 aufweist.

## Revendications

1. Ensemble de montage d'attache comprenant une attache (C) et un siège de montage d'attache (F) pour monter ladite attache (C) sur un composant intérieur de véhicule (R), ladite attache (C) comprenant une partie axiale (c1) en forme de pilier, ledit siège de montage d'attache (F) comprenant une section de siège d'attache (1) ; ladite section de siège d'attache (1) ayant un trou de mise en prise (11) pour recevoir par mise en prise ladite partie axiale (c1) de ladite attache (C) et une paire de parties de bord de guidage (10a, 10b) s'étendant vers ledit trou de mise en prise (11) à partir d'un côté de ladite section de siège d'attache (1) afin de former ainsi une fente progressivement rétrécie pour permettre à ladite partie axiale (c1) de ladite attache (C) de coulisser le long de ladite paire de parties de bord de guidage (10a, 10b) et permettre à ladite partie axiale (c1) de ladite attache (C) d'être guidée dans ledit trou de mise en prise (11) ; ladite fente progressivement rétrécie ayant une extrémité interne plus petite qu'un diamètre externe de ladite partie axiale (c1) de ladite attache (C) ; ledit trou de mise en prise (11) étant formé dans une forme sensiblement circulaire ayant une taille supérieure audit diamètre externe de ladite partie axiale (c1) de ladite attache (C) ; et ledit trou de mise en prise (11) continuant à partir des extrémités internes desdites parties de bord de guidage (10a, 10b) ; dans lequel :
au moins l'une desdites parties de bord de guidage (10a, 10b) est prévue avec une pièce en saillie (12a, 12b, 12) ;
**caractérisé en ce que** :
ladite pièce en saillie (12a, 12b, 12) fait saillie dans ledit trou de mise en prise (11) à partir d'une extrémité interne de ladite au moins une desdites parties de bord de guidage (10a, 10b), dans lequel ladite pièce en saillie (12a, 12b, 12) comprend une surface d'extrémité de pointe ayant une largeur qui permet à ladite surface d'extrémité de pointe de venir opérationnellement en contact de surface avec ladite partie axiale (c1) de ladite attache (C).

2. Ensemble de montage d'attache selon la revendication 1, dans lequel chacune desdites parties de bord de guidage (10a, 10b) est prévue avec ladite pièce en saillie (12a, 12b).

3. Ensemble de montage d'attache selon la revendication 1 ou 2, dans lequel ladite surface d'extrémité de pointe est formée selon une forme d'arc circulaire pour s'adapter autour de ladite partie axiale (c1) de ladite attache (C).

4. Ensemble de montage d'attache selon la revendication 1, dans lequel la pièce en saillie (12a ; 12b) est formée de sorte qu'un côté de la pièce en saillie s'étend de manière linéaire à partir d'une partie de bord de guidage (10a ou 10b) correspondante.

5. Ensemble de montage d'attache selon la revendication 1, dans lequel le côté de la pièce en saillie (12a ; 12b) est formé pour avoir des régions d'inclinaison (13a, 13b) qui sont inclinées vers le trou de mise en prise (11) à partir des extrémités internes des parties de bord de guidage (10a ou 10b).

6. Composant intérieur de véhicule (R) ayant une pluralité d'ensembles de montage d'attache selon l'une quelconque des revendications 1 à 5.
